(19) Europäisches Patentamt
European Patent Office
Office européen des brevets

(11) **EP 3 311 119 B1**

(12) **EUROPÄISCHE PATENTSCHRIFT**

(45) Veröffentlichungstag und Bekanntmachung des Hinweises auf die Patenterteilung:
**16.10.2019   Patentblatt 2019/42**

(21) Anmeldenummer: **16727687.2**

(22) Anmeldetag: **07.06.2016**

(51) Int Cl.:
*G01D 18/00* (2006.01)        *H02P 6/34* (2016.01)

(86) Internationale Anmeldenummer:
**PCT/EP2016/062834**

(87) Internationale Veröffentlichungsnummer:
**WO 2016/202625 (22.12.2016 Gazette 2016/51)**

(54) **STEUERSCHALTUNG UND VERFAHREN ZUM PLAUSIBILISIEREN EINES ROTORLAGEWINKELS**

CONTROL CIRCUIT AND METHOD FOR CHECKING THE PLAUSIBILITY OF A ROTOR POSITION ANGLE

CIRCUIT DE COMMANDE ET PROCÉDÉ POUR VALIDER LA PLAUSIBILITÉ D'UNE POSITION ANGULAIRE DE ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2015   DE 102015211194**

(43) Veröffentlichungstag der Anmeldung:
**25.04.2018   Patentblatt 2018/17**

(73) Patentinhaber: **Robert Bosch GmbH
70442 Stuttgart (DE)**

(72) Erfinder:
• **UNGERMANN, Michael
  64285 Darmstadt (DE)**
• **LECHNER, Benjamin
  75242 Neuhausen (DE)**
• **ZIRKEL, Daniel
  75446 Wiernsheim-Serres (DE)**
• **RAICHLE, Daniel
  71665 Vaihingen (DE)**

(56) Entgegenhaltungen:
WO-A1-2006/039884        DE-A1-102011 079 116
DE-A1-102012 202 772     DE-A1-102013 204 194

• **D. LUENBERGER: "An introduction to observers", IEEE TRANSACTIONS ON AUTOMATIC CONTROL., Bd. 16, Nr. 6, 1. Dezember 1971 (1971-12-01), Seiten 596-602, XP055287125, US ISSN: 0018-9286, DOI: 10.1109/TAC.1971.1099826**

EP 3 311 119 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Steuerschaltung und Verfahren zum Plausibilisieren eines Rotorlagewinkels, insbesondere eines Rotorlagewinkels, welcher durch einen Rotorlagesensor ermittelt wird, welcher einen totzeitkompensierten Rohwinkel ermittelt. Bei dem Rotorlagewinkel handelt es sich insbesondere um einen Winkel, in welchem ein Rotor einer Synchronmaschine oder einer Asynchronmaschine ausgerichtet ist. Bei der Synchronmaschine kann es sich beispielsweise um eine permanenterregte oder eine elektrisch erregte Synchronmaschine handeln.

Stand der Technik

Zur Regelung von permanenterregten Synchronmaschinen und von elektrisch erregten Synchronmaschinen, wie sie beispielsweise in Hybrid- und Elektrofahrzeugen eingesetzt werden, ist die Kenntnis des Rotorlagewinkels nötig. Dieser wird auch kurz als Rotorwinkel oder Drehwinkel bezeichnet und erhält häufig das mathematische Symbol $\varphi_{el}$. Zur Ermittlung des Rotorlagewinkels sind verschiedene Sensorarten bekannt, zum Beispiel digitale Winkelgebersignale, Resolver, oder Sensoren auf Basis des Wirbelstromeffekts.

Die deutsche Patentanmeldung DE 10 2011 078 583 A1 offenbart beispielsweise eine Auswertung von Resolver-Sensorsignalen in einem Fahrzeug. Ein Resolver nimmt hierzu eine Drehbewegung eines Rotors auf, und ein Prozessorelement verarbeitet die sinus- bzw. kosinusförmigen Ausgangssignale des Resolver.

Eine Plausibilisierung des ermittelten Rotorlagewinkels ist aufgrund der Bedeutung, die dem Rotorlagewinkel zukommt, wünschenswert.

In der DE 10 2011 079 116 A1 ist ein Verfahren zum Überprüfen der Plausibilität der Ausgangssignale eines Resolvers beschrieben, wobei Soll-Werte für alle theoretisch möglichen diskreten Winkelstellungen des Motors während wenigstens einer gesamten Motorumdrehung ermittelt werden, und eine Summe von normierten Quadraten von diskreten Ausgangssignalen mit den Soll-Werten verglichen wird. Es werden nur diejenigen diskreten Ausgangssignale für das Ermitteln der Winkelstellung des Rotors relativ zum Stator des Motors verwendet, für welche sich die Summe der Quadrate von dem Soll-Wert maximal um einen vorgegebenen Wert unterscheidet.

In der Veröffentlichung von D. Luenberger, "An Introduction to Observers", IEEE Transactions on Automatic Control, Bd. 16, Nr. 6, 1. Dezember 1971, Seiten 596-602, XP055287125, ISSN: 0018-9286, DOI: 10.1109/TAC.1971.1099826, wird das Konzept eines so genannten Luenberger-Beobachters beschrieben.

Offenbarung der Erfindung

Die vorliegende Erfindung offenbart eine Steuerschaltung mit den Merkmalen des Patentanspruchs 1 und ein Verfahren mit den Merkmalen des Patentanspruchs 6.

Demgemäß ist eine Steuerschaltung zum Plausibilisieren eines Rotorlagewinkels vorgesehen, mit: einer Rotorlagewinkel-Ermittlungseinrichtung zum Ermitteln eines ersten Rotorlagewinkels, $\varphi(t_k)$, zu einem ersten Zeitpunkt, $t_k$, insbesondere aus erfassten ersten Messgrößen, und zumindest eines zweiten Rotorlagewinkels $\varphi(t_{k-1})$, zu einem zweiten Zeitpunkt, $t_{k-1}$ vor dem ersten Zeitpunkt, $t_k$, insbesondere aus erfassten zweiten Messgrößen; einer Recheneinrichtung zum Ermitteln eines zu dem ersten Zeitpunkt, $t_k$, zu erwartenden Rotorlagewinkels, $\varphi_{mod}(t_k)$, aus einem Rechenmodell der Recheneinrichtung unter Verwendung zumindest des zweiten Rotorlagewinkels, $\varphi(t_{k-1})$; und einer Plausibilisierungseinrichtung zum Ausgeben eines Signals, welches den ermittelten ersten Rotorlagewinkel $\varphi(t_k)$ als plausibel indiziert, wenn ein Betrag einer Differenz zwischen dem zu erwartenden Rotorlagewinkel $\varphi_{mod}(t_k)$, und dem ermittelten ersten Rotorlagewinkel $\varphi(t_k)$ einen vorbestimmten Schwellenwert nicht überschreitet.

Der zu erwartende Rotorwinkel kann auch als eine Prognose oder Schätzung für den zu ermittelnden ersten Rotorwinkel bezeichnet werden.

Die Erfindung schafft weiterhin ein Verfahren zum Plausibilisieren eines Rotorlagewinkels, mit den Schritten: Ermitteln eines ersten Rotorlagewinkels, $\varphi(t_k)$, zu einem ersten Zeitpunkt, $t_k$, insbesondere aus erfassten ersten Messgrößen; Ermitteln zumindest eines zweiten Rotorlagewinkels, $\varphi(t_{k-1})$, zu einem zweiten Zeitpunkt, $t_{k-1}$, vor dem ersten Zeitpunkt, $t_k$, insbesondere aus erfassten zweiten Messgrößen; Ermitteln eines zu dem ersten Zeitpunkt, $t_k$, zu erwartenden Rotorlagewinkels, $\varphi_{mod}(t_k)$, aus einem Rechenmodell unter Verwendung zumindest des zweiten Rotorlagewinkels, $\varphi(t_{k-1})$; und Ausgeben eines Signals, welches den ermittelten ersten Rotorlagewinkel, $\varphi(t_k)$, als plausibel indiziert, wenn ein Betrag einer Differenz zwischen dem zu erwartenden Rotorlagewinkel, $\varphi_{mod}(t_k)$, und dem ermittelten ersten Rotorlagewinkel, $\varphi(t_k)$, einen vorbestimmten Schwellenwert nicht überschreitet.

Das Ermitteln eines - ersten, zweiten oder dritten - Rotorlagewinkels kann insbesondere ein Erfassen von Messgrößen und ein Berechnen des Rotorlagewinkels basierend auf den erfassten Messgrößen umfassen oder daraus bestehen. Beispielhafte Messgrößen sind etwa Zeit, ein Magnetfeld, ein elektrisches Feld, eine Spannung, ein Widerstand und Ähnliches.

Es soll verstanden werden, dass das erfindungsgemäße Verfahren kontinuierlich durchgeführt werden kann.

Das heißt, dass nach einem ersten Ausführen des Verfahrens, wobei der ermittelte erste Rotorlagewinkel zum ersten Zeitpunkt plausibilisiert wurde, zum Plausibilisieren eines vierten Rotorlagewinkels zu einem vierten Zeitpunkt, welcher nach dem ersten Zeitpunkt liegt, der vierte Zeitpunkt in dem Verfahren an die Stelle des ersten Zeitpunkts tritt und der erste Zeitpunkt in dem Verfahren an die Stelle des zweiten Zeitpunkts tritt, und immer so weiter bei jedem weiteren Ausführen des Verfahrens. Gleiches gilt analog für die erfindungsgemäße Steuerschaltung.

Unter einem Plausibilisieren eines Rotorlagewinkels soll insbesondere ein Einstufen des Rotorlagewinkels als plausibel, d.h. als hinreichend glaubwürdig oder annehmbar verstanden werden.

Vorteile der Erfindung

Im Gutfall, das heißt bei einem Übereinstimmen des zu erwartenden Rotorlagewinkels zu dem ersten Zeitpunkt mit dem ermittelten ersten Rotorlagewinkel ist der Betrag der Differenz dieser beiden Größen null. Damit ist im Gutfall der Abstand dieses Betrags zu dem vorbestimmten Schwellenwert, bis zu welchem der Rotorlagewinkel als plausibel indiziert werden soll, maximal. Somit lassen sich Missed-Faults und False-Alarms bei dem Plausibilisieren des Rotorlagewinkels, d.h. fehlerhaftes Indizieren eines inkorrekt ermittelten Rotorlagewinkels als plausibel sowie fehlerhaftes Indizieren eines korrekt ermittelten Rotorlagewinkels als unplausibel, verringern oder vermeiden.

Der ermittelte Rotorlagewinkel kann vorteilhaft auf erfassten Messgrößen basieren, welcher beispielsweise mittels einer Phasenregelschleife und/oder einem Zustandsvariablenfilter zum Erlangen des Rotorlagewinkels vorverarbeitet und/oder gefiltert wurden. Somit wird bei dem Plausibilisieren des Rotorlagewinkels das dynamische Verhalten der Vorverarbeitung, etwa durch die Phasenregelschleife oder den Zustandsvariablenfilter, ebenfalls plausibilisiert. Insbesondere kann aus einem nicht als plausibel indizierten Rotorlagewinkel, bzw. einem als unplausibel indizierten Rotorlagewinkel, auf ein Ausrasten, das heißt ein Verlassen einer Ruhelage, der Phasenregelschleife oder des Zustandsvariablenfilters geschlossen werden. Somit kann das Indizieren des Rotorlagewinkels als plausibel oder nicht plausibel einer Überwachung einer Regeldifferenz des Zustandsvariablenfilters entsprechen.

Eine Phasenregelschleife, auch als englisch phase-locked loop (PLL) bezeichnet, ist eine elektronische Schaltungsanordnung, die die Phasenlage und damit zusammenhängend die Frequenz eines veränderbaren Oszillators über einen geschlossenen Regelkreis so beeinflusst, dass die Phasenabweichung zwischen einem äußeren Referenzsignal und dem Oszillator oder einem daraus abgeleiteten Signal möglichst konstant ist.

Zudem sind die erfindungsgemäße Steuerschaltung und das erfindungsgemäße Verfahren deutlich weniger rausch- und störanfällig als herkömmliche Steuerschaltungen und Verfahren aus dem Stand der Technik.

Vorteilhafte Ausführungsformen und Weiterbildungen ergeben sich aus den Unteransprüchen sowie aus der Beschreibung unter Bezugnahme auf die Figuren.

Gemäß einer vorteilhaften Weiterbildung ist die Rotorlagewinkel-Ermittlungseinrichtung zum Ermitteln eines dritten Rotorlagewinkels $\varphi(t_{k-2})$ zu einem dritten Zeitpunkt $t_{k-2}$ vor dem zweiten Zeitpunkt $t_{k-1}$ ausgebildet und die Recheneinrichtung zum Ermitteln des zu dem ersten Zeitpunkt $t_k$ zu erwartenden Rotorlagewinkels $\varphi_{mod}(t_k)$ aus dem Rechenmodell unter Verwendung des zweiten Rotorlagewinkels $\varphi(t_{k-1})$ und des dritten Rotorlagewinkels $\varphi(t_{k-2})$ ausgebildet. Somit kann eine vergrößerte Menge von Werten für das Ermitteln des zu erwartenden Rotorlagewinkels berücksichtigt werden, wodurch sich die Akkuratheit des Ermittelns verbessern kann.

Gemäß einer weiteren vorteilhaften Weiterbildung ist das Rechenmodell der Recheneinrichtung derart gestaltet, dass das Ermitteln des zu dem ersten Zeitpunkt zu erwartenden Rotorlagewinkels $\varphi_{mod}(t_k)$ aus dem Rechenmodell basierend auf einer Differenz zwischen dem zweiten Rotorlagewinkel $\varphi(t_{k-1})$ und dem dritten Rotorlagewinkel $\varphi(t_{k-2})$ geteilt durch eine Differenz zwischen dem zweiten Zeitpunkt $t_{k-1}$ und dem dritten Zeitpunkt $t_{k-2}$ multipliziert mit einer Differenz aus dem ersten Zeitpunkt $t_k$ und dem zweiten Zeitpunkt $t_{k-1}$ basiert. Insbesondere basiert das Ermitteln auf einer Summe der genannten Differenz und dem ermittelten zweiten Rotorlagewinkel. Somit kann der zu erwartende Rotorlagewinkel noch akkurater ermittelt werden.

Gemäß einer weiteren vorteilhaften Weiterbildung umfasst das Rechenmodell der Recheneinrichtung ein kinematisches Modell eines Antriebsstrangs innerhalb eines Luenberger-Beobachters. Durch Verwenden zusätzlicher Systemgrößen, wie beispielsweise eines Drehmoments, kann eine Güte des mittels des Rechenmodells bestimmten, zu erwartenden Rotorlagewinkels $\varphi_{mod}(t_k)$ weiter verbessert werden, da hier auch Änderungen der Drehfrequenz und/oder deren Ursache berücksichtigt werden können.

Gemäß einer weiteren vorteilhaften Weiterbildung werden die Rotorlagewinkel, insbesondere der erste, zweite und der dritte Rotorlagewinkel, unter Verwendung eines Zustandsvariablenfilters und/oder einer Phasenregelschleife aus erfassten Messgrößen ermittelt. Der Zustandsvariablenfilter kann zum Filtern von Winkelsignalen, welche einen ermittelten ersten, zweiten oder dritten Rotorlagewinkel indizieren, mit einem PTn-Glied n-ter Ordnung und basierend auf Zustandsvariablen ausgebildet sein.

Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:

Fig. 1    ein schematisches Blockschaltbild zum Erläutern einer Steuerschaltung gemäß einer Ausführungsform der vorliegenden Erfindung;

Fig. 2    ein schematisches Blockschaltbild zum Erläutern einer Steuerschaltung gemäß einer weiteren Ausführungsform der vorliegenden Erfindung;

Fig. 3    ein schematisches Blockschaltbild zum Erläutern einer Steuerschaltung gemäß einer weiteren Ausführungsform der vorliegenden Erfindung;

Fig. 4    ein schematisches Blockschaltbild zum Erläutern einer Steuerschaltung gemäß einer weiteren Ausführungsform der vorliegenden Erfindung;

Fig. 5    ein schematisches Flussdiagramm zum Erläutern eines Verfahrens zum Plausibilisieren eines Rotorlagewinkels gemäß noch einer weiteren Ausführungsform der vorliegenden Erfindung;

Fig. 6    ein schematisches Flussdiagramm zum Erläutern eines Verfahrens zum Plausibilisieren eines Rotorlagewinkels gemäß noch einer weiteren Ausführungsform der vorliegenden Erfindung;

Fig. 7    ein schematisches Flussdiagramm zum Erläutern eines Verfahrens zum Plausibilisieren eines Rotorlagewinkels gemäß einer weiteren Ausführungsform der vorliegenden Erfindung; und

Fig. 8    ein schematisches Flussdiagramm zum Erläutern eines Verfahrens zum Plausibilisieren eines Rotorlagewinkels gemäß noch einer weiteren Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

Beschreibung der Ausführungsbeispiele

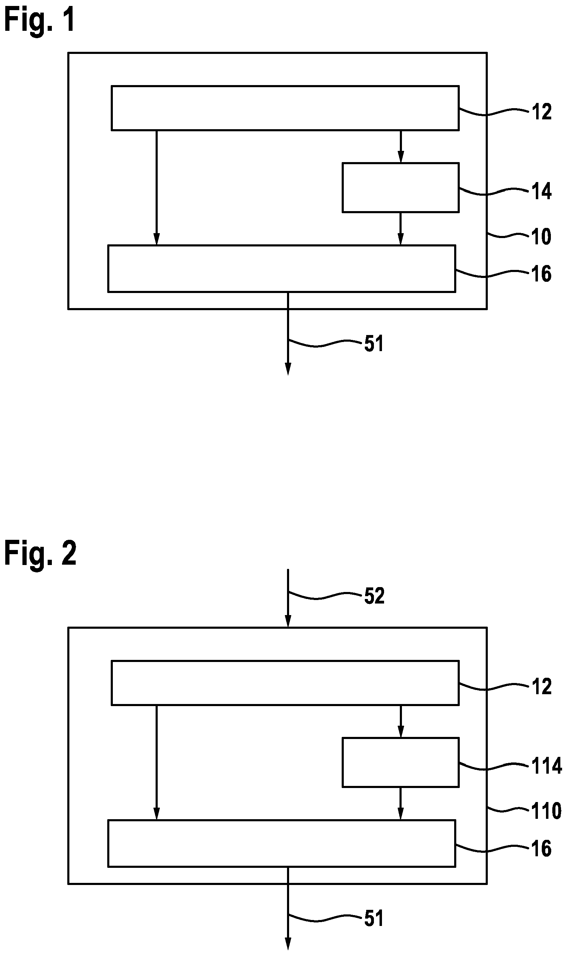

Fig. 1 zeigt ein schematisches Blockschaltbild zum Erläutern einer Steuerschaltung 10 gemäß einer Ausführungsform der vorliegenden Erfindung.

Die Steuerschaltung 10 umfasst eine Rotorlagewinkel-Ermittlungseinrichtung 12, mittels welcher ein erster Rotorlagewinkel $\varphi(t_k)$ zu einem ersten Zeitpunkt, $t_k$ und zumindest ein zweiter Rotorlagewinkel $\varphi(t_{k-1})$ zu einem zweiten Zeitpunkt $t_{k-1}$ ermittelbar ist. Vorzugsweise ist mittels der Rotorlagewinkel-Ermittlungseinrichtung 12 eine beliebige Anzahl von Rotorlagewinkeln nacheinander ermittelbar. Die ermittelten Rotorlagewinkel sind in der Rotorlagewinkel-Ermittlungseinrichtung 12 und/oder in einer optionalen Speichereinrichtung der Steuerschaltung 10 speicherbar.

In dem vorliegenden Beispiel werden Zeitpunkte durch den Index "k" der zeitlichen Reihe nach nummeriert, sodass der Zeitpunkt $t_{k-1}$ vor dem ersten Zeitpunkt $t_k$ liegt, welcher wiederum vor einem Zeitpunkt $t_{k+1}$ liegt und so weiter. Bevorzugt liegen die Zeitpunkte $t_{k-1}$, $t_k$, $t_{k+1}$ etc. voneinander durch eine zeitliche Dauer getrennt, welche genau, oder einem ganzzahligen Vielfachen, einer minimalen zeitlichen Dauer gleich ist, welche gemäß der Rotorlagewinkel-Ermittlungseinrichtung 12 zwischen zwei Ermittlungen eines Rotorlagewinkels liegt. Mit anderen Worten wird die Zeit bevorzugt in so kleine Zeitintervalle zwischen Zeitpunkten $t_k$ eingeteilt, wie die Rotorlagewinkel-Ermittlungseinrichtung 12 auflösen kann. Verschiedene Rotorlagewinkel werden durch die verschiedenen Zeitpunkte, zu denen diese ermittelt werden, charakterisiert. Die Rotorlagewinkel-Ermittlungseinrichtung 12 kann beispielsweise als ein Resolver oder als Sensor auf Basis des Wirbelstromeffekts ausgebildet sein.

Die Steuerschaltung 10 umfasst weiterhin eine Recheneinrichtung 14, mittels welcher ein zu dem ersten Zeitpunkt $t_k$ zu erwartender Rotorlagewinkel $\varphi_{mod}(t_k)$ aus einem Rechenmodell der Recheneinrichtung 14 unter Verwendung zumindest des zweiten Rotorlagewinkels $\varphi(t_{k-1})$ ermittelbar ist. In einem einfachen Fall kann das Rechenmodell derart gestaltet sein, dass der zu dem Zeitpunkt $t_k$ zu erwartende Rotorlagewinkel $\varphi_{mod}(t_k)$ genau dem zweiten Rotorlagewinkel $\varphi(t_{k-1})$ entspricht, welcher der zeitlich unmittelbar vorangehend ermittelte Rotorlagewinkel ist.

Die Steuerschaltung 10 umfasst weiterhin eine Plausibilisierungseinrichtung 16, mittels welcher ein Signal 51 ausgebbar ist, welches den ermittelten ersten Rotorlagewinkels $\varphi(t_k)$ als plausibel indiziert, wenn ein Betrag einer Differenz zwischen dem zu erwartenden Rotorlagewinkel $\varphi_{mod}(t_k)$, und dem ermittelten ersten Rotorlagewinkel $\varphi(t_k)$ einen vorbestimmten Schwellenwert S nicht überschreitet.

Das heißt, das Signal 51 wird durch die Plausibilisierungseinrichtung 16 ausgegeben, falls $|\varphi(t_k) - \varphi(t_{k-1})| < S$.

Fig. 2 zeigt ein schematisches Blockschaltbild zum Erläutern einer Steuerschaltung 110 gemäß einer weiteren Ausführungsform der vorliegenden Erfindung.

Die Steuerschaltung 110 ist eine Variante der Steuerschaltung 10 und unterscheidet sich von dieser in der Konfiguration der Recheneinrichtung 114 der Steuerschaltung 110.

Bei der Steuerschaltung 110 ist die Rotorlagewinkel-Ermittlungseinrichtung 12 dazu ausgebildet, mindestens einen dritten Rotorlagewinkel $\varphi(t_{k-2})$ zu einem dritten Zeitpunkt $t_{k-2}$ vor dem zweiten Zeitpunkt $t_{k-1}$ zu ermitteln. Die Recheneinrichtung 114 ist zum Ermitteln des zu dem ersten Zeitpunkt, $t_k$, zu erwartenden Rotorlagewinkels $\varphi_{mod}(t_k)$ aus dem Rechenmodell unter Verwendung des zweiten Rotorlagewinkels $\varphi(t_{k-1})$ und des dritten Rotorlagewinkels $\varphi(t_{k-2})$ ausgebildet.

Das Rechenmodell der Recheneinrichtung 14 ist derart gestaltet, dass das Ermitteln des zu dem ersten Zeitpunkt zu erwartenden Rotorlagewinkels $\varphi_{mod}(t_k)$ aus dem Rechenmodell basierend auf einer Differenz zwischen dem zweiten Rotorlagewinkel $\varphi(t_{k-1})$ und dem dritten Rotorlagewinkel $\varphi(t_{k-2})$, geteilt durch eine Differenz zwischen dem zweiten Zeitpunkt, $t_{k-1}$, und dem dritten Zeitpunkt, $t_{k-2}$, multipliziert mit einer Differenz aus dem ersten Zeitpunkt $t_k$ und dem zweiten Zeitpunkt $t_{k-1}$ basiert.

Insbesondere wird gemäß dem Rechenmodell der Recheneinrichtung 14 als zu dem ersten Zeitpunkt zu erwartender Rotorlagewinkel $\varphi_{mod}(t_k)$ eine Summe der oben erwähnten Differenz zwischen dem ermittelten zweiten Rotorlagewinkel $\varphi(t_{k-1})$ und dem ermittelten dritten Rotorlagewinkel $\varphi(t_{k-2})$, geteilt durch eine Differenz zwischen dem zweiten Zeitpunkt, $t_{k-1}$, und dem dritten Zeitpunkt, $t_{k-2}$, multipliziert mit einer Differenz aus dem ersten Zeitpunkt, $t_k$, und dem zweiten Zeitpunkt, $t_{k-1}$ als erstem Summanden, sowie des ermittelten zweiten Rotorlagewinkels $\varphi(t_{k-1})$ als zweitem Summanden gebildet.

Das heißt, $\varphi_{mod}(t_k) = \varphi(t_{k-1}) + \frac{\varphi(t_{k-1}) - \varphi(t_{k-2})}{t_{k-1} - t_{k-2}}(t_k - t_{k-1})$. Somit wird das Signal 51 durch die Plausibilisierungseinrichtung 16 ausgegeben, falls $\left| \varphi(t_k) - \varphi(t_{k-1}) - \frac{\varphi(t_{k-1}) - \varphi(t_{k-2})}{t_{k-1} - t_{k-2}}(t_k - t_{k-1}) \right| < S$.

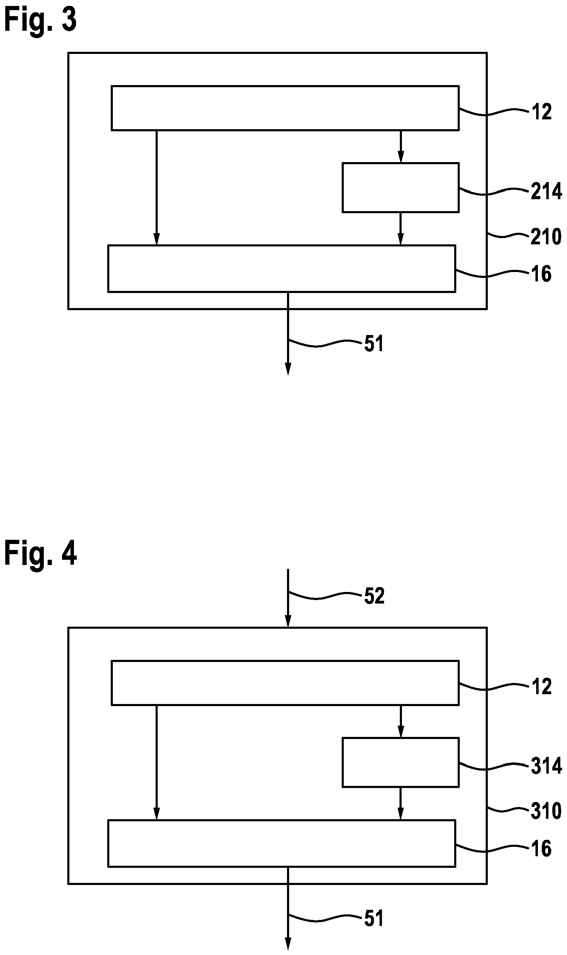

Fig. 3 zeigt ein schematisches Blockschaltbild zum Erläutern einer Steuerschaltung 210 gemäß einer weiteren Ausführungsform der vorliegenden Erfindung.

Die Steuerschaltung 210 ist eine Variante der Steuerschaltung 10 und unterscheidet sich von dieser in der Konfiguration der Recheneinrichtung 214 der Steuerschaltung 210. Die Recheneinrichtung 214 der Steuerschaltung 210 ist derart konfiguriert, dass das Rechenmodell der Recheneinrichtung 214 ein kinematisches Modell eines Antriebsstrangs innerhalb eines Luenberger-Beobachters umfasst. Der Antriebsstrang ist Teil eines Fahrzeug, welches den Rotor umfasst, dessen Rotorlagewinkel zu bestimmen und zu plausibilisieren ist.

Fig. 4 zeigt ein schematisches Blockschaltbild zum Erläutern einer Steuerschaltung 310 gemäß einer weiteren Ausführungsform der vorliegenden Erfindung.

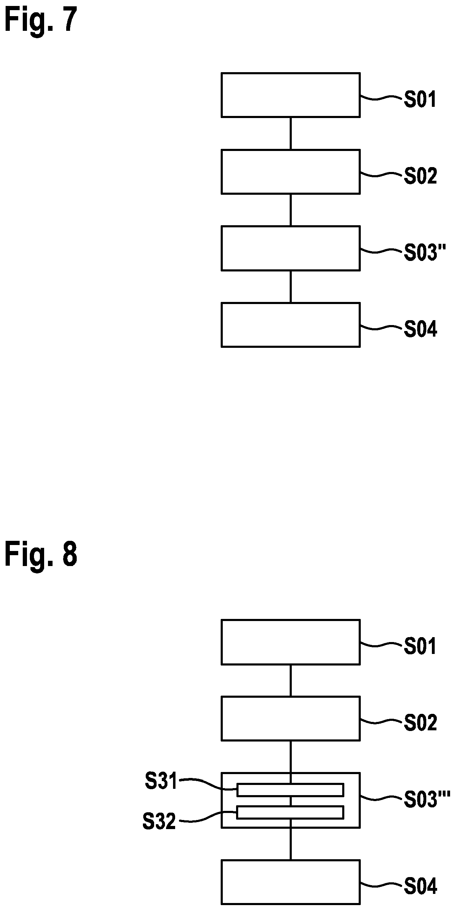

Die Steuerschaltung 310 ist eine Variante der Steuerschaltung 10 und unterscheidet sich von dieser in der Konfiguration der Recheneinrichtung 314 der Steuerschaltung 310. Die Recheneinrichtung 314 ist dazu ausgebildet, den zu erwartenden Rotorlagewinkel $\varphi_{mod}(t_k)$ zum ersten Zeitpunkt $t_k$ mit Hilfe mindestens eines Abtastwerts aus der Vergangenheit, das heißt des zweiten, dritten etc. Rotorlagewinkels $\varphi(t_{k-1})$, $\varphi(t_{k-2})$ zu ermitteln. Die Recheneinrichtung 314 ist dazu ausgelegt, dabei einen Zustandsvariablenfilter zu verwenden, insbesondere wie in Bezug auf Fig. 8 nachfolgend erläutert.

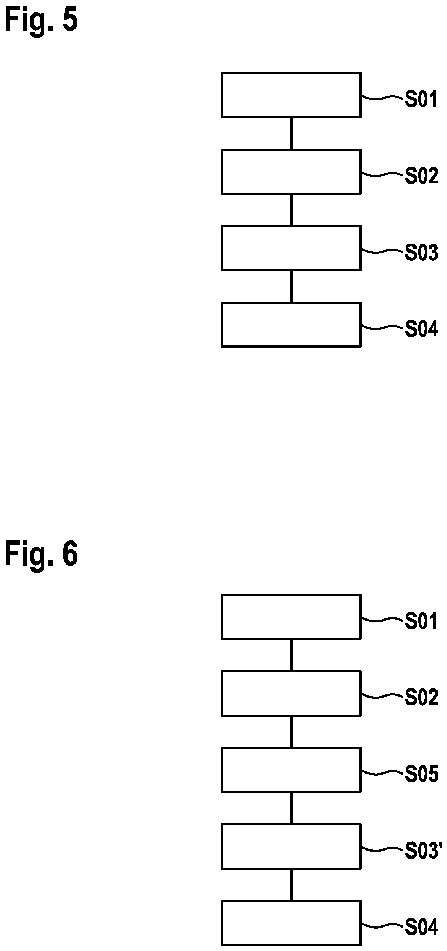

Fig. 5 zeigt ein schematisches Flussdiagramm zum Erläutern eines Verfahrens zum Plausibilisieren eines Rotorlagewinkels gemäß noch einer weiteren Ausführungsform der vorliegenden Erfindung. Für eine Erklärung der Bezeichnung der verschiedenen Zeitpunkte $t_{k-1}$, $t_k$, $t_{k+1}$ etc. wird insbesondere auf die Erläuterungen zu Fig. 1 verwiesen.

Das Verfahren gemäß Fig. 5 ist insbesondere zum Durchführen mittels einer erfindungsgemäßen Steuerschaltung, insbesondere der Steuerschaltung 10, geeignet, und kann gemäß allen in Bezug auf die erfindungsgemäße Steuerschaltung, insbesondere die Steuerschaltungen 10, 110, 210 und 310 beschriebenen Varianten und Weiterbildung angepasst werden.

In einem Schritt S01 wird zu einem ersten Zeitpunkt $t_k$ ein erster Rotorlagewinkel $\varphi(t_k)$ ermittelt. In einem Schritt S02 wird zumindest ein zweiter Rotorlagewinkel $\varphi(t_k)$ zu einem zweiten Zeitpunkt $t_{k-1}$ vor dem ersten Zeitpunkt $t_k$ ermittelt. In einem Schritt S03 wird aus einem Rechenmodell unter Verwendung zumindest des zweiten Rotorlagewinkels $\varphi(t_{k-1})$ ein zu dem ersten Zeitpunkt $t_k$ zu erwartender Rotorlagewinkel $\varphi_{mod}(t_k)$ ermittelt. In einem Schritt S04 wird, falls ein Betrag einer Differenz zwischen dem zu erwartenden Rotorlagewinkel $\varphi_{mod}(t_k)$ und dem ermittelten ersten Rotorlagewinkel $\varphi(t_k)$, einen vorbestimmten Schwellenwert S nicht überschreitet, ein Signal 51 ausgegeben, welches den ermittelten ersten Rotorlagewinkel $\varphi(t_k)$, als plausibel indiziert.

Fig. 6 zeigt ein schematisches Flussdiagramm zum Erläutern eines Verfahrens zum Plausibilisieren eines Rotorlagewinkels gemäß noch einer weiteren Ausführungsform der vorliegenden Erfindung.

Bei dem Verfahren gemäß Fig. 6 handelt es sich um eine Variante des Verfahrens gemäß Fig. 5, welches sich von diesem in dem Schritt S03' und in einem zusätzlichen Schritt S05 unterscheidet.

In dem Schritt S05 wird ein dritter Rotorlagewinkel $\varphi(t_{k-2})$ zu einem dritten Zeitpunkt $t_{k-2}$ vor dem zweiten Zeitpunkt $t_{k-1}$ ermittelt. In dem Schritt S03' wird der zu dem ersten Zeitpunkt $t_k$ zu erwartende Rotorlagewinkel $\varphi_{mod}(t_k)$ aus dem Rechenmodell unter Verwendung des zweiten Rotorlagewinkels $\varphi(t_{k-1})$ und des dritten Rotorlagewinkels $\varphi(t_{k-2})$ ermittelt.

Das Rechenmodell, welches in dem Verfahren gemäß Fig. 6 verwendet wird, ist derart gestaltet, dass das Ermitteln S03' des zu dem ersten Zeitpunkt zu erwartenden Rotorlagewinkels $\varphi_{mod}(t_k)$ aus dem Rechenmodell basierend auf einer Differenz zwischen dem zweiten Rotorlagewinkel $\varphi(t_{k-1})$ und dem dritten Rotorlagewinkel $\varphi(t_{k-2})$, geteilt durch eine Differenz zwischen dem zweiten Zeitpunkt, $t_{k-1}$, und dem dritten Zeitpunkt, $t_{k-2}$, multipliziert mit einer Differenz aus dem ersten Zeitpunkt $t_k$ und dem zweiten Zeitpunkt $t_{k-1}$ basiert.

Insbesondere wird gemäß dem Rechenmodell der Recheneinrichtung 14 als zu dem ersten Zeitpunkt zu erwartender Rotorlagewinkel $\varphi_{mod}(t_k)$ eine Summe der oben erwähnten Differenz zwischen dem ermittelten zweiten Rotorlagewinkel $\varphi(t_{k-1})$ und dem ermittelten dritten Rotorlagewinkel $\varphi(t_{k-2})$, geteilt durch eine Differenz zwischen dem zweiten Zeitpunkt, $t_{k-1}$, und dem dritten Zeitpunkt, $t_{k-2}$, multipliziert mit einer Differenz aus dem ersten Zeitpunkt, $t_k$, und dem zweiten Zeitpunkt, $t_{k-1}$ als erstem Summanden, sowie des ermittelten zweiten Rotorlagewinkels $\varphi(t_{k-1})$ als zweitem Summanden gebildet.

Das heißt, $\varphi_{mod}(t_k) = \varphi(t_{k-1}) + \frac{\varphi(t_{k-1}) - \varphi(t_{k-2})}{t_{k-1} - t_{k-2}}(t_k - t_{k-1})$. Somit wird das Signal 51 durch die Plausibilisierungseinrichtung 16 ausgegeben, falls $\left| \varphi(t_k) - \varphi(t_{k-1}) - \frac{\varphi(t_{k-1}) - \varphi(t_{k-2})}{t_{k-1} - t_{k-2}}(t_k - t_{k-1}) \right| < S.$

Fig. 7 zeigt ein schematisches Flussdiagramm zum Erläutern eines Verfahrens zum Plausibilisieren eines Rotorlagewinkels gemäß noch einer weiteren Ausführungsform der vorliegenden Erfindung.

Bei dem Verfahren gemäß Fig. 7 handelt es sich um eine Variante des Verfahrens gemäß Fig. 5, welches sich von diesem in dem Rechenmodell unterscheidet, welches bei dem Ermitteln des zu dem ersten Zeitpunkt $t_k$ zu erwartenden Zeitpunkts verwendet wird. In einem Schritt S03", welcher ansonsten dem Schritt S03 aus Fig. 6 entspricht, wird als Rechenmodell ein kinematisches Modell eines Antriebsstrangs innerhalb eines Luenberger-Beobachters verwendet.

Fig. 8 zeigt ein schematisches Flussdiagramm zum Erläutern eines Verfahrens zum Plausibilisieren eines Rotorlagewinkels gemäß einer weiteren Ausführungsform der vorliegenden Erfindung.

Bei dem Verfahren gemäß Fig. 8 handelt es sich um eine Variante des Verfahrens gemäß Fig. 5, welches sich von diesem in dem Schritt S03''' unterscheidet. In dem Schritt S03''' wird in einem Unterschritt S31 zumindest der ermittelte zweite Rotorlagewinkel $\varphi(t_{k-1})$ gefiltert, bevorzugt mittels eines Zustandsvariablenfilters, besonders bevorzugt mit einem PTn-Glied n-ter Ordnung und/oder basierend auf Zustandsvariablen. Optional kann auch der ermittelte erste Rotorlagewinkel $\varphi(t_k)$ vor der weiteren Verarbeitung entsprechend gefiltert werden. Bevorzugt wird jeder ermittelte Rotorlagewinkel vor seiner weiteren Verarbeitung entsprechend gefiltert. Durch das Filtern S31 des ermittelten zweiten Rotorlagewinkels $\varphi(t_{k-1})$ wird ein gefiltertes Winkelsignal basierend auf dem ermittelten zweiten Rotorlagewinkel $\varphi(t_{k-1})$ erzeugt. In einem Unterschritt S32 wird zumindest aus dem erzeugten gefilterten Winkelsignal mittels des Rechenmodells der zu erwartende Rotorlagewinkel $\varphi_{mod}(t_k)$ zum ersten Zeitpunkt $t_k$ ermittelt, etwa wie in Bezug auf die Figuren 1 bis 7 beschrieben, wobei statt des ermittelten zweiten Rotorlagewinkels $\varphi(t_{k-1})$ stets das erzeugte gefilterte Winkelsignal verwendet wird. Beispielsweise bei den Verfahren gemäß Fig. 2 und Fig. 6 kann ebenso der ermittelte dritte Rotorlagewinkel $\varphi(t_{k-2})$, ggf. auch jeder weitere ermittelte Rotorlagewinkel, entsprechend gefiltert werden und ein gefiltertes Winkelsignal jeweils den ermittelten Rotorlagewinkel ersetzen.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise wurden Rechenmodelle beschrieben, welche jeweils den letzten und/oder den vorletzten ermittelten Rotorlagewinkel zum Plausibilisieren eines zu ermittelnden Rotorlagewinkels heranziehen. Denkbar ist aber auch, dass noch weitere zeitlich vorangehend ermittelte Rotorlagewinkel in dem Rechenmodell verwendet werden.

**Patentansprüche**

**1.** Steuerschaltung (10; 110; 210; 310) zum Plausibilisieren eines Rotorlagewinkels, mit:

einer Rotorlagewinkel-Ermittlungseinrichtung (12) zum Ermitteln eines ersten Rotorlagewinkels, $\varphi(t_k)$, zu einem ersten Zeitpunkt, $t_k$, und zumindest eines zweiten Rotorlagewinkels, $\varphi(t_{k-1})$, zu einem zweiten Zeitpunkt, $t_{k-1}$, vor dem ersten Zeitpunkt, $t_k$;

einer Recheneinrichtung (14; 114; 214; 314) zum Ermitteln eines zu dem ersten Zeitpunkt, $t_k$, zu erwartenden Rotorlagewinkels, $\varphi_{mod}(t_k)$, aus einem Rechenmodell der Recheneinrichtung (14; 114; 214; 314) unter Verwendung zumindest des zweiten Rotorlagewinkels, $\varphi(t_{k-1})$ als eine Prognose oder Schätzung für den zu ermittelnden ersten Rotorlagewinkel $\varphi(t_k)$; und einer Plausibilisierungseinrichtung (16) zum Ausgeben eines Signals (51), welches den ermittelten ersten Rotorlagewinkel $\varphi(t_k)$, als plausibel indiziert, wenn ein Betrag einer Differenz zwischen dem zu erwartenden Rotorlagewinkel $\varphi_{mod}(t_k)$, und dem ermittelten ersten Rotorlagewinkel $\varphi(t_k)$, einen vorbestimmten Schwellenwert nicht überschreitet.

2. Steuerschaltung (110; 210; 310) nach Anspruch 1,
wobei die Rotorlagewinkel-Ermittlungseinrichtung (12) zum Ermitteln eines dritten Rotorlagewinkels, $\varphi(t_{k-2})$, zu einem dritten Zeitpunkt, $t_{k-2}$, vor dem zweiten Zeitpunkt, $t_{k-1}$ ausgebildet ist; und
wobei die Recheneinrichtung (114) zum Ermitteln des zu dem ersten Zeitpunkt, $t_k$, zu erwartenden Rotorlagewinkels, $\varphi_{mod}(t_k)$, aus dem Rechenmodell unter Verwendung des zweiten Rotorlagewinkels $\varphi(t_{k-1})$ und des dritten Rotorlagewinkels, $\varphi(t_{k-2})$, ausgebildet ist.

3. Steuerschaltung (110) nach Anspruch 2,
wobei das Rechenmodell der Recheneinrichtung (114) derart gestaltet ist, dass das Ermitteln des zu dem ersten Zeitpunkt zu erwartenden Rotorlagewinkels, $\varphi_{mod}(t_k)$, aus dem Rechenmodell basierend auf einer Differenz zwischen dem zweiten Rotorlagewinkel, $\varphi(t_{k-1})$, und dem dritten Rotorlagewinkel, $\varphi(t_{k-2})$, geteilt durch eine Differenz zwischen dem zweiten Zeitpunkt, $t_{k-1}$, und dem dritten Zeitpunkt, $t_{k-2}$, multipliziert mit einer Differenz aus dem ersten Zeitpunkt, $t_k$, und dem zweiten Zeitpunkt, $t_{k-1}$, basiert.

4. Steuerschaltung (210) nach Anspruch 1 oder 2,
wobei das Rechenmodell der Recheneinrichtung (214) ein kinematisches Modell eines Antriebstrangs innerhalb eines Luenberger-Beobachters umfasst.

5. Steuerschaltung (310) nach Anspruch 1 oder 2,
wobei die Recheneinrichtung (314) dazu ausgebildet ist, zu dem ersten Zeitpunkt, $t_k$, zu erwartenden Rotorlagewinkel, $\varphi_{mod}(t_k)$, unter Verwendung eines Zustandsvariablenfilters und/ oder einer Phasenregelschleife zu ermitteln.

6. Verfahren zum Plausibilisieren eines Rotorlagewinkels, mit den Schritten:

Ermitteln (S01) eines ersten Rotorlagewinkels, $\varphi(t_k)$" zu einem ersten Zeitpunkt, $t_k$;
Ermitteln (S02) zumindest eines zweiten Rotorlagewinkels, $\varphi(t_{k-1})$, zu einem zweiten Zeitpunkt, $t_{k-1}$, vor dem ersten Zeitpunkt, $t_k$;
Ermitteln (S03; S03'; S03"; S03''') eines zu dem ersten Zeitpunkt, $t_k$, zu erwartenden Rotorlagewinkels, $\varphi_{mod}(t_k)$ als eine Prognose oder Schätzung für den zu ermittelnden ersten Rotorlagewinkel $\varphi(t_k)$, aus einem Rechenmodell unter Verwendung zumindest des zweiten Rotorlagewinkels, $\varphi(t_{k-1})$; und
Ausgeben (S04) eines Signals (51), welches den ermittelten ersten Rotorlagewinkel, $\varphi(t_k)$" als plausibel indiziert, wenn ein Betrag einer Differenz zwischen dem zu erwartenden Rotorlagewinkel, $\varphi_{mod}(t_k)$, und dem ermittelten ersten Rotorlagewinkel, $\varphi(t_k)$, einen vorbestimmten Schwellenwert nicht überschreitet.

7. Verfahren nach Anspruch 6, mit dem Schritt:

Ermitteln (S05) eines dritten Rotorlagewinkels, $\varphi(t_{k-2})$, zu einem dritten Zeitpunkt, $t_{k-2}$, vor dem zweiten Zeitpunkt, $t_{k-1}$;
wobei das Ermitteln (S03') des zu dem ersten Zeitpunkt, $t_k$, zu erwartenden Rotorlagewinkels, $\varphi_{mod}(t_k)$, aus dem Rechenmodell unter Verwendung des zweiten Rotorlagewinkels $\varphi(t_{k-1})$, und des dritten Rotorlagewinkels, $\varphi(t_{k-2})$, erfolgt.

8. Verfahren nach Anspruch 7,
wobei das das Rechenmodell derart gestaltet ist, dass das Ermitteln (S03') des zu dem ersten Zeitpunkt, $t_k$, zu erwartenden Rotorlagewinkels, $\varphi_{mod}(t_k)$, aus dem Rechenmodell basierend auf einer Differenz zwischen dem zweiten Rotorlagewinkel, $\varphi(t_{k-1})$, und dem dritten Rotorlagewinkel, $\varphi(t_{k-2})$, geteilt durch eine Differenz zwischen dem zweiten Zeitpunkt, $t_{k-1}$, und dem dritten Zeitpunkt, $t_{k-2}$, multipliziert mit einer Differenz aus dem ersten Zeitpunkt, $t_k$,

und dem zweiten Zeitpunkt, $t_{k-1}$, basiert.

9. Verfahren nach Anspruch 6 oder 7,
   wobei als Rechenmodell ein kinematisches Modell eines Antriebstrangs innerhalb eines Luenberger-Beobachters verwendet wird.

10. Verfahren nach Anspruch 6 oder 7,
    wobei der zu dem ersten Zeitpunkt, $t_k$, zu erwartenden Rotorlagewinkel, $\varphi_{mod}(t_k)$, unter Verwendung eines Zustands-variablenfilters und/oder einer Phasenregelschleife ermittelt wird.

**Claims**

1. Control circuit (10; 110; 210; 310) for checking the plausibility of a rotor position angle, having:

   a rotor position angle-determining device (12) for determining a first rotor position angle $\varphi(t_k)$ at a first point in time $t_k$ and at least one second rotor position angle $\varphi(t_{k-1})$ at a second point in time $t_{k-1}$ before the first point in time $t_k$;
   a computer device (14; 114; 214; 314) for determining a rotor position angle $\varphi_{mod}(t_k)$ to be expected at the first point in time $t_k$, from a computational model of the computing device (14; 114; 214; 314) using at least the second rotor position angle $\varphi(t_{k-1})$ as a prediction or estimate of the first rotor position angle $\varphi(t_k)$ to be determined; and
   a plausibility-checking device (16) for outputting a signal (51) which identifies the determined first rotor position angle $\varphi(t_k)$ as plausible if an absolute value of a difference between the rotor position angle $\varphi_{mod}(t_k)$ to be expected and the determined first rotor position angle $\varphi(t_k)$ does not exceed a predetermined threshold value.

2. Control circuit (110; 210; 310) according to Claim 1,
   wherein the rotor position angle-determining device (12) is designed to determine a third rotor position angle $\varphi(t_{k-2})$ at a third point in time $t_{k-2}$ before the second point in time $t_{k-1}$; and
   wherein the computing device (114) is designed to determine the rotor position angle $\varphi_{mod}(t_k)$ to be expected at the first point in time $t_k$, from the computational model using the second rotor position angle $\varphi(t_{k-1})$ and the third rotor position angle $\varphi(t_{k-2})$.

3. Control circuit (110) according to Claim 2,
   wherein the computational model of the computing device (114) is configured in such a way that the determination of the rotor position angle $\varphi_{mod}(t_k)$ to be expected at the first point in time from the computational model is based on a difference between the second rotor position angle $\varphi(t_{k-1})$ and the third rotor position angle $\varphi(t_{k-2})$ divided by a difference between the second point in time $t_{k-1}$ and the third point in time $t_{k-2}$ multiplied by a difference between the first point in time $t_k$ and the second point in time $t_{k-1}$.

4. Control circuit (210) according to Claim 1 or 2,
   wherein the computational model of the computing device (214) comprises a kinematic model of a drive train within a Luenberger observer.

5. Control circuit (310) according to Claim 1 or 2,
   wherein the computing device (314) is designed to determine the rotor position angle $\varphi_{mod}(t_k)$ to be expected at the first point in time $t_k$ using a state variable filter and/or a phase locked loop.

6. Method for checking the plausibility of a rotor position angle, having the steps:

   determining (S01) a first rotor position angle $\varphi(t_k)$ at a first point in time $t_k$;
   determining (S02) at least one second rotor position angle $\varphi(t_{k-1})$ at a second point in time $t_{k-1}$ before the first point in time $t_k$;
   determining (S03; S03'; S03"; S03''') a rotor position angle $\varphi_{mod}(t_k)$ to be expected at the first point in time $t_k$, as a prediction or estimate of the first rotor position angle $\varphi(t_k)$ to be determined from a computational model using at least the second rotor position angle $\varphi(t_{k-1})$ ; and
   outputting (S04) a signal (51) which identities the determined first rotor position angle $\varphi(t_k)$ as plausible if an absolute value of a difference between the rotor position angle $\varphi_{mod}(t_k)$ to be expected and the determined first

rotor position angle $\varphi(t_k)$ does not exceed a predetermined threshold value.

7. Method according to Claim 6, having the step:

determining (S05) a third rotor position angle $\varphi(t_{k-2})$ at a third point in time $t_{k-2}$ before the second point in time $t_{k-1}$ ; wherein the determination (S03') of the rotor position angle $\varphi_{mod}(t_k)$ to be expected at the first point in time $t_k$ from the computational model is carried out using the second rotor position angle $\varphi(t_{k-1})$ and the third rotor position angle $\varphi(t_{k-2})$.

8. Method according to Claim 7, wherein the computational model is configured in such a way that the determination (S03') of the rotor position angle $\varphi_{mod}(t_k)$ to be expected at the first point in time $t_k$ from the computational model is based on a difference between the second rotor position angle $\varphi(t_{k-1})$ and the third rotor position angle $\varphi(t_{k-2})$ divided by a difference between the second point in time $t_{k-1}$ and the third point in time $t_{k-2}$ multiplied by a difference between the first point in time $t_k$ and the second point in time $t_{k-1}$.

9. Method according to Claim 6 or 7, wherein a kinematic model of a drive train is used as a computational model within a Luenberger observer.

10. Method according to Claim 6 or 7, wherein the rotor position angle $\varphi_{mod}(t_k)$ to be expected at the first point in time $t_k$ is determined using a state variable filter and/or a phase locked loop.


**Revendications**

1. Circuit de commande (10 ; 110 ; 210 ; 310) destiné à vérifier la plausibilité d'un angle de position de rotor, comprenant :

un dispositif de détermination d'angle de position de rotor (12) destiné à déterminer un premier angle de position de rotor, $\varphi(t_k)$, à un premier instant, $t_k$, et au moins un deuxième angle de position de rotor, $\varphi(t_{k-1})$, à un deuxième instant, $t_{k-1}$, avant le premier instant, $t_k$ ; un dispositif de calcul (14 ; 114 ; 214 ; 314) destiné à déterminer un angle de position de rotor à attendre, $\varphi_{mod}(t_k)$, au premier instant, $t_k$, à partir d'un modèle de calcul du dispositif de calcul (14 ; 114 ; 214 ; 314) en utilisant au moins le deuxième angle de position de rotor, $\varphi(t_{k-1})$, comme prévision ou estimation pour le premier angle de position de rotor, $\varphi(t_k)$, à déterminer ; et un dispositif de vérification de plausibilité (16) destiné à délivrer un signal (51) qui indexe comme étant plausible le premier angle de position de rotor, $\varphi(t_k)$, déterminé lorsqu'un montant d'une différence entre l'angle de position de rotor à attendre, $\varphi_{mod}(t_k)$, et le premier angle de position de rotor, $\varphi(t_k)$, déterminé ne dépasse pas une valeur de seuil prédéterminée.

2. Circuit de commande (110 ; 210 ; 310) selon la revendication 1, le dispositif de détermination d'angle de position de rotor (12) étant configuré pour déterminer un troisième angle de position de rotor, $\varphi(t_{k-2})$, à un troisième instant, $t_{k-2}$, avant le deuxième instant, $t_{k-1}$ ; et le dispositif de calcul (114) étant configuré pour déterminer l'angle de position de rotor à attendre, $\varphi_{mod}(t_k)$, au premier instant, $t_k$, à partir du modèle de calcul en utilisant le deuxième angle de position de rotor, $\varphi(t_{k-1})$, et le troisième angle de position de rotor, $\varphi(t_{k-2})$.

3. Circuit de commande (110) selon la revendication 2, le modèle de calcul du dispositif de calcul (114) étant conçu de telle sorte que la détermination de l'angle de position de rotor à attendre, $\varphi_{mod}(t_k)$, au premier instant à partir du modèle de calcul se base sur une différence entre le deuxième angle de position de rotor, $\varphi(t_{k-1})$, et le troisième angle de position de rotor, $\varphi(t_{k-2})$, divisée par une différence entre le deuxième instant, $t_{k-1}$, et le troisième instant, $t_{k-2}$, multipliée par une différence du premier instant, $t_k$, et du deuxième instant, $t_{k-1}$.

4. Circuit de commande (210) selon la revendication 1 ou 2, le modèle de calcul du dispositif de calcul (214) comprenant un modèle cinématique d'un groupe motopropulseur à l'intérieur d'un observateur de Luenberger.

**5.** Circuit de commande (310) selon la revendication 1 ou 2,
le dispositif de calcul (314) étant configuré pour déterminer l'angle de position de rotor à attendre, $\varphi_{mod}(t_k)$, au premier instant, $t_k$, en utilisant un filtre à variable d'état et/ou une boucle de régulation de phase.

**6.** Procédé de vérification de la plausibilité d'un angle de position de rotor, comprenant les étapes suivantes :

détermination (S01) d'un premier angle de position de rotor, $\varphi(t_k)$, à un premier instant, $t_k$ ;
détermination (S02) d'au moins un deuxième angle de position de rotor, $\varphi(t_{k-1})$, à un deuxième instant, $t_{k-1}$, avant le premier instant, $t_k$ ;
détermination (S03 ; S03' ; S03" ; S03''') d'un angle de position de rotor à attendre, $\varphi_{mod}(t_k)$, au premier instant, $t_k$, en tant que prévision ou estimation pour le premier angle de position de rotor, $\varphi(t_k)$, à déterminer à partir d'un modèle de calcul en utilisant au moins le deuxième angle de position de rotor, $\varphi(t_{k-1})$ ; et
délivrance (S04) d'un signal (51) qui indexe comme étant plausible le premier angle de position de rotor, $\varphi(t_k)$, déterminé lorsqu'un montant d'une différence entre l'angle de position de rotor à attendre, $\varphi_{mod}(t_k)$, et le premier angle de position de rotor, $\varphi(t_k)$, déterminé ne dépasse pas une valeur de seuil prédéterminée.

**7.** Procédé selon la revendication 6, comprenant l'étape suivante :

détermination (S05) d'un troisième angle de position de rotor, $\varphi(t_{k-2})$, à un troisième instant, $t_{k-2}$, avant le deuxième instant, $t_{k-1}$ ;
la détermination (S03') de l'angle de position de rotor à attendre, $\varphi_{mod}(t_k)$, au premier instant, $t_k$, à partir du modèle de calcul étant effectuée en utilisant le deuxième angle de position de rotor, $\varphi(t_{k-1})$ et le troisième angle de position de rotor, $\varphi(t_{k-2})$.

**8.** Procédé selon la revendication 7,
le modèle de calcul étant conçu de telle sorte que la détermination (S03') de l'angle de position de rotor à attendre, $\varphi_{mod}(t_k)$, au premier instant, $t_k$, à partir du modèle de calcul se base sur une différence entre le deuxième angle de position de rotor, $\varphi(t_{k-1})$, et le troisième angle de position de rotor, $\varphi(t_{k-2})$, divisée par une différence entre le deuxième instant, $t_{k-1}$, et le troisième instant, $t_{k-2}$, multipliée par une différence du premier instant, $t_k$, et du deuxième instant, $t_{k-1}$.

**9.** Procédé selon la revendication 6 ou 7,
le modèle de calcul utilisé étant un modèle cinématique d'un groupe motopropulseur à l'intérieur d'un observateur de Luenberger.

**10.** Procédé selon la revendication 6 ou 7,
l'angle de position de rotor à attendre, $\varphi_{mod}(t_k)$, au premier instant, $t_k$, étant déterminé en utilisant un filtre à variable d'état et/ou une boucle de régulation de phase.

## Fig. 1

## Fig. 2

# Fig. 3

# Fig. 4

# Fig. 5

```
┌──────────────┐
│              │──── S01
└──────────────┘
       │
┌──────────────┐
│              │──── S02
└──────────────┘
       │
┌──────────────┐
│              │──── S03
└──────────────┘
       │
┌──────────────┐
│              │──── S04
└──────────────┘
```

# Fig. 6

```
┌──────────────┐
│              │──── S01
└──────────────┘
       │
┌──────────────┐
│              │──── S02
└──────────────┘
       │
┌──────────────┐
│              │──── S05
└──────────────┘
       │
┌──────────────┐
│              │──── S03'
└──────────────┘
       │
┌──────────────┐
│              │──── S04
└──────────────┘
```

# Fig. 7

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011078583 A1

- DE 102011079116 A1

**In der Beschreibung aufgeführte Nicht-Patentliteratur**

- **D. LUENBERGER.** An Introduction to Observers. *IEEE Transactions on Automatic Control,* 01. Dezember 1971, vol. 16 (6), ISSN 0018-9286, 596-602